# EUROPEAN PATENT APPLICATION

(11) **EP 1 030 034 A2**
(43) Date of publication of application: **23.08.2000**
(21) Application number: 99308377.3
(22) Date of filing: 25.10.1999
(51) Int. Cl.: E21B 43/38, B01D 19/00

(54) **Modularization of gas/oil separator**

(30) Priority: 15.02.1999 US 250479
(71) Applicant: Hudson Products Corporation, Houston, Texas 77036-3321 (US)
(72) Inventor: Millas, George S., Houston, Texas 77035 (US); Richardson, Robert A., Katy, Texas 77450 (US)
(74) Representative: Pilch, Adam John Michael

(57) **Abstract**

A secondary separator (50) in an arrangement for separating a gas and liquid mixture is supported with a primary separator (30) of the arrangement, by liquid drain tubes (66) from the secondary separator. The arrangement has a vessel with an inlet for entry of the gas and liquid mixture and an outlet for exit of a separated gas, at least one primary centrifugal separator (30) in the vessel for centrifugally separating the gas from the mixture; and at least one secondary centrifugal separator (50) in the vessel for further centrifugally separating the gas from the mixture. The secondary separator has a liquid collection enclosure (60) with an upper end and a lower end. An outlet plate (64) extends across the lower end for closing the lower end of the enclosure. The outlet plate (64) has a plurality of drain openings there-through and a plurality of drain tubes (66) are spaces around the enclosure, each drain tube being connected to one of the drain openings for draining liquid from to the enclosure. The drain tubes are connected to the enclosure for supporting the secondary separator in the arrangement.

## Description

### FIELD AND BACKGROUND OF THE INVENTION

The present invention relates, in general, to separation systems and, in particular, to a new and useful secondary separator and internal support for the arrangement for separating a multiple phase mixture into separate vapor and liquid phases utilizing pairs of centrifugal cyclone separators.

Most of the known gas/oil separation systems rely on natural or gravity separation which requires large vessels to achieve the desired separation performance. When natural separation is used in a relatively small vessel, the throughput or vapor flux of that system is significantly smaller when compared to other systems not relying on natural separation. An example of a system which uses natural separation is described in U.S. Patent No. 4,982,794.

One known separation system is disclosed in U.K. Patent Application No. GB 2 203 062A and uses centrifugal separation for a primary separation stage and inertial separation (i.e., scrubbers) for a second stage of separation. Although this system most likely has higher separation capacities than a system relying on natural separation, it most likely has higher separation capacities than a system relying on natural separation, it most likely has less capacity when compared to a system that could employ centrifugal separation for both stages.

U.S. Patent Application Serial No. 08/337,359, filed November 10, 1994, abandoned in favor of Continuation U.S. Patent Application Serial No. 08/695,947, filed August 13, 1996, the text of which are hereby incorporated by reference as though fully set forth herein, discloses an improved separator which uses centrifugal separation modules for the primary and secondary stages of separation.

The internals of the separator in this prior patent application, i.e., the primary and secondary separators, the return tube and the drain tube, were installed as separate units. The present invention modularizes these units.

### SUMMARY OF THE INVENTION

The invention addresses the problem of providing a modularization designed for the internals of the separator arrangement, in particular, for supporting the secondary and also the primary separator in a modular fashion.

Accordingly, one aspect of the invention provides an arrangement for separating a gas and liquid mixture, the arrangement having a vessel with an inlet for entry of the gas and liquid mixture and an outlet for exit of a separated gas, at least one primary centrifugal separator in the vessel for centrifugally separating the gas from the mixture; and at least one secondary centrifugal separator in the vessel for further centrifugally separating the gas from the mixture; the improvement comprising: the secondary separator having means defining a liquid collection enclosure with an upper end and a lower end; an outlet plate extending across the lower end for closing the lower end of the enclosure, the outlet plate having a plurality of drain openings there-through; and a plurality of drain tubes spaces around the enclosure, each drain tube being connected to one of the drain openings for draining liquid from to the enclosure, the drain tubes being connected to the enclosure for supporting the secondary separator in the arrangement.

A further aspect of the present invention provides support for the primary separator on the drain tubes by connecting the drain tubes to an outer drain cylinder of the primary separator.

The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which a preferred embodiment of the invention is illustrated.

### BRIEF DESCRIPTION OF THE DRAWINGS :

In the drawings:
Fig. 1 is a perspective view of the internals of a gas/liquid separator showing parts of an embodiment of the present invention; and
Fig. 2 is a side elevational view of the primary and secondary separators, illustrating an embodiment of the present invention.

### DESCRIPTION OF THE PREFERRED EMBODIMENTS:

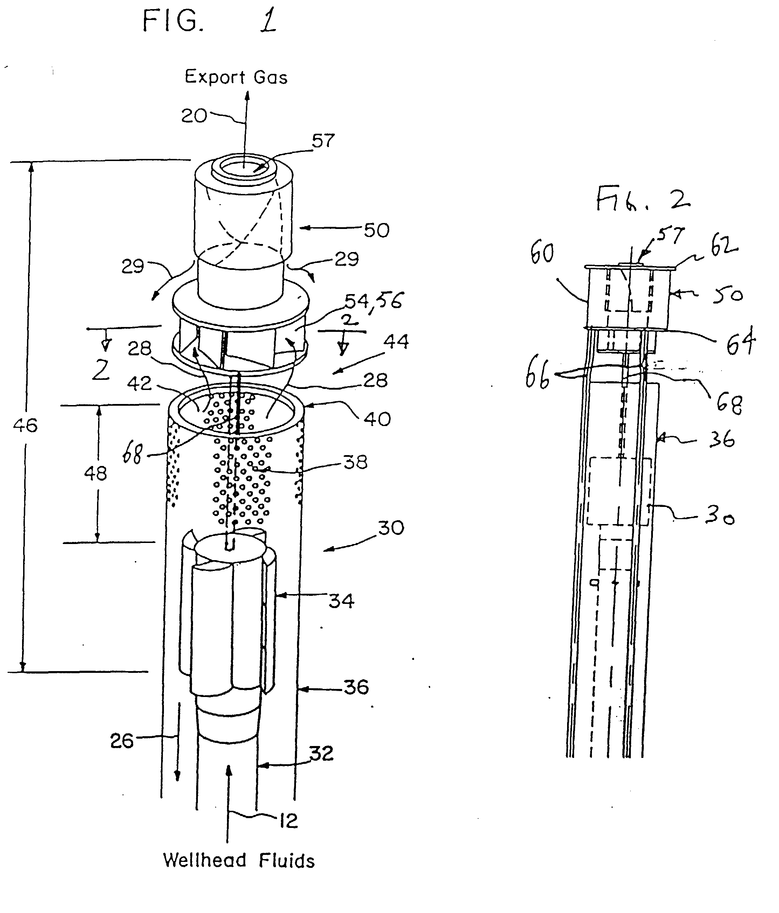

The primary separator 30 of Fig. 1 comprises a riser tube 32, four sets of multilayered curved arms 34, and an outer can or return cylinder 36 surrounding riser 32 and arms 34. The gas/liquid mixture 12 enters at the bottom of the primary riser 32 and flows up and through the curved arms 34 where the majority of the centrifugal separation occurs. During the separation process, a film of liquid 26 develops on the inner wall of the return cylinder 36 and cascades down to the main inventory of liquid below the separator 30 (not shown). The return cylinder 36 extends above the top of the curved-arms 34 where there are a number of half-inch diameter perforations 38 and a retaining lip 40 at open top of separator 30 which are used to improve the liquid removal capabilities of the separator 30 at high gas and liquid flows especially where slug conditions can exist. The wet gas 12 exits the top of the primary separator(s) 30 into a substantially open interstage region 44 which is used to more evenly distribute the wet gas prior to its entering the secondary cyclone(s) 50.

The distance between the multi-layered curved arms 34 and the top of the primary cyclone separator 30 is indicated at reference numeral 48 and preferably ranges from approximately 15 to approximately 18 inches.

As the two-phase mixture 12 flows through the curved arms 34, separation occurs and The heavier liquid droplets 26 migrate to the outer radius of the curved arms 34 and the less dense vapor migrates to the inner radius of the curved arms 34.

The secondary cyclone 50 also operates on the principle of centrifugal separation. the wet gas 28 enters the cyclone 50 through tangential inlet vanes 54 at the bottom of the cyclone 50 which imparts a centrifugal motion on the fluid. Any liquid remaining in the gas is then forced to the inner wall of the cyclone 50 where it is separated by skimmer slots and spills into a secondary compartment (not shown). Bypass holes are placed in a top plate of the secondary compartment to allow a certain amount of gas flow 29 to bypass through the secondary skimmer slots to enhance the skimming action. The separated liquid then drains via a drain tube (not shown in Fig. 1) back into and becomes a part of the main pressure vessel's liquid inventory. The drain tube isolates the returning separated liquid from the upflowing main gas flow and avoids the re-entrainment of separated liquid by the incoming gas/liquid mixtures 12. Dry gas exits at 20 through outlet 57.

The secondary cyclone 50 has an inherent advantage over scrubber or mesh type dryers. Both the scrubber and mesh dryers are limited in flow capacity by the droplet entrainment threshold beyond which liquid droplets are entrained with the vapor and are carried downstream. The secondary cyclone 50, on the other hand, can efficiently operate at vapor fluxes typically two to three times higher than the entrainment threshold.

Referring to Fig. 2, the secondary separator 50 includes a cylindrical outer enclosure 60 which was not shown in Fig. 1 and which has a larger diameter than the inlet portion 56 of the secondary separator 50. Enclosure 60 has upper and lower ends respectively covered by upper and lower plates 62,64. Upper plate 62 extends beyond the diameter of enclosure 60 to form a mounting flange which is connected to the main separator vessel, for example, by circumferentially spaced bolts (not shown). Lower plate 64, near its outer perimeter, includes a plurality, for example, three drain holes therethrough, which are each connected to a separate drain tube 66. The drain tubes extend downwardly from the enclosure 60 for draining liquid separated out in the secondary separator 50. The drain tubes can be bent slightly outwardly and then extend parallel and axially along the outer surface of drain cylinder 36 of the primary separator 30. Drain tubes 66 may be connected. for example by the welding. to the outer surface of the drain cylinder 36 to support the drain cylinder and thus, the primary separator. In this way, both the primary and secondary separators are supported by the mounting flange 26 and can be removed as a unit and in a modular fashion.

To even better secure the connection between the primary and secondary separators, an additional tie tube 68 is connected between these two units for securing them to each other. By connecting the primary and secondary separators using the drain tubes 66 and the tie tube 68, large energy surges from working fluid transfer between the separators can be accommodated.

The modular arrangement of the present invention makes it easier to install and remove both separators and both during the manufacturing operation at a manufacturing area, and in the field. In practice, eight bolts are used to connect the mounting flange 62 to the separator vessel and these are the only bolts that need be disconnected for removing the modular secondary plus primary separator structures.

While a specific embodiment of the invention has been shown and described in detail to illustrate the application of the principles of the invention, it will be understood that the invention may be embodied otherwise without departing from such principles.

## Claims

1. An arrangement for separating a gas and liquid mixture having a vessel with an inlet for entry of the gas and liquid mixture and an outlet for exit of a separated gas, at least one primary centrifugal separator in the vessel for centrifugally separating the gas from the mixture and at least one secondary centrifugal separator in the vessel for further centrifugally separating the gas from the mixture; characterised by
the secondary separator (50) having means defining a liquid collection enclosure (60) with an upper end and a lower end; and by comprising:
an outlet plate (64) extending across the lower end for closing the lower end of the enclosure, the outlet plate having a plurality of drain openings there-through; and
a plurality of drain tubes (66) spaced around the enclosure, each drain tube being connected to one of the drain openings for draining liquid from the enclosure, the drain tubes being connected to the enclosure for supporting the secondary separator in the arrangement.

2. The arrangement of claim 1, wherein the primary separator includes a return cylinder for draining liquid from the primary separator, the drain tubes extending along an outer surface of the return cylinder.

3. The arrangement of claim 2, wherein the drain tubes (66) are fixed to the outer surface of the return cylinder.

4. The arrangement of claim 1, 2 or 3 wherein the primary separator includes a drain cylinder (36), the drain tubes being connected to the drain cylinder for supporting the drain cylinder.

5. The arrangement of any preceding claim, including a tie tube (68) connected between the primary and secondary separators for further connecting the primary separator and the secondary separator.

6. The arrangement of any preceding claim, wherein the enclosure includes an upper plate (62) connected to and extending across the upper end of the enclosure, the upper plate including a mounting flange for mounting the secondary separator to the vessel.
